# EUROPÄISCHE PATENTSCHRIFT

(11) **EP 2 302 307 B1**
(45) Veröffentlichungstag und Bekanntmachung des Hinweises auf die Patenterteilung: **12.10.2011**
(21) Anmeldenummer: 10169938.7
(22) Anmeldetag: 16.07.2010
(51) Int. Cl.: F24J 2/12, G02B 7/183

(54) **Präzisions-Spiegel mit geklebten Rippen**
Precision mirror with bonded fins
Miroir de précision doté de rainures collées

(30) Priorität: 24.09.2009 DE 202009011055 U; 23.11.2009 DE 102009044624
(43) Veröffentlichungstag der Anmeldung: 30.03.2011
(73) Patentinhaber: Thomas Lorenz Industrietechnik GmbH & Co. KG, 49134 Wallenhorst (DE)
(72) Erfinder: Lorenz, Thomas, 49134 Wallenhorst-Hollage (DE)
(74) Vertreter: Habbel, Ludwig

(56) Entgegenhaltungen:
- WO-A2-01/90662
- ES-A1- 2 157 179
- FR-A1- 2 853 732
- US-A- 5 645 693

## Beschreibung

Die Erfindung betrifft einen Präzisions-Spiegel mit einer schalenförmigen Spiegelfläche.

Beispielsweise für die Nutzung von Sonnenenergie sind konkav gewölbte Präzisions-Spiegel bekannt, welche das auftreffende Sonnenlicht reflektieren und bündeln, so dass es zur Erhitzung und ggf. Verdampfung fluider Energieträger genutzt werden kann. Anders als bei Spiegeln, die als Reflektoren von Fahrzeugscheinwerfern eingesetzt werden, sind bei derartigen Anwendungsfällen Spiegeldurchmesser von mehreren Metern nicht unüblich. Da der Wirkungsgrad der Solaranlage erheblich beeinträchtigt wird, wenn die durch den Spiegel bewirkte Fokussierung nicht ausreichend präzise ist, werden an diese Spiegel erhebliche Anforderungen hinsichtlich der einzuhaltenden Toleranzen gestellt, was angesichts der Größe der Spiegel deren Herstellung kompliziert und teuer macht.

Diese großen und hochgenauen Spiegel werden im Rahmen des vorliegenden Vorschlags als Präzisions-Spiegel bezeichnet. Dabei kommt es im Rahmen des vorliegenden Vorschlags auf die prinzipielle Konstruktion des Präzisions-Spiegels an, so dass nicht nur die eigentliche reflektierende Spiegelschicht, sondern auch etliche zusätzliche Bauteile einer fertiggestellten Spiegelkonstruktion nachfolgend nicht erwähnt werden, beispielsweise Montagematerial wie Schrauben, Klammern oder dergleichen, oder ein Haltegerüst, in welchem der Spiegel - vorzugsweise beweglich und somit dem Sonnenstand nachführbar - gehalten ist.

Problematisch ist häufig der Transport derartiger Präzisions-Spiegel: da diese häufig Abmessungen von mehreren Metern und ein dementsprechend hohes Gewicht aufweisen, ist deren Handhabung schwierig. Zudem ist die Beladung von Fahrzeugen mit derartig großen Gegenständen umständlich ist, denn zur Sicherstellung der optischen Eigenschaften dürfen die Spiegel nicht beschädigt bzw. verformt werden. Schließlich ist der Transport kostspielig, weil jeweils nur ein oder wenige derartige Präzisions-Spiegel auf ein Transportfahrzeug passen.

Aus der US 5 645 693 A ist ein gattungsgemäßer Präzisions-spiegel bekannt, bei dem ein korbartiges Gestell aus mehreren Längsrippen und aus ringförmigen Querrippen vorgesehen ist. In dieses Gestell ist eine Vielzahl von Segmenten eingeschraubt. Die Segmente weisen auf ihrer Rückseite jeweils mehrere angeformte Verstärkungsrippen auf. Sowohl die Längs- und Querrippen des korbartiges Gestells als auch die Segmente bestehen jeweils aus glasfaserverstärktem Kunststoff. Die Präzision des Spiegel soll durch das Design der Längsrippen des korbartigen Gestells erzielt werden.

Nachteilig für das Einhalten der gewünschten optischen Präzision ist, dass eine Vielzahl von Längsrippen jeweils nur punktuell mit den ringförmigen Querrippen verbunden ist, und dass die Querrippen sowie die Längsrippen Aussparungen aufweisen, um den jeweils anderen Rippentyp aufzunehmen. Fertigungstoleranzen der einzelnen Kunststoff-Bauteile und die Art der Konstruktion des Spiegels erschweren das Einhalten enger Toleranzen, was die Geometrie der reflektierenden Spiegeloberfläche angeht. Durch die vielen Rippen und Schrauben sind sehr viele Bauteile zu handhaben, was hinsichtlich der Materialkosten sowie der Montagezeit wirtschaftlich nachteilig ist und die Fehlerwahrscheinlichkeit erhöht, dass die Verbindung von Bauteilen an einer oder mehreren Verbindungsstellen nicht wie vorgesehen erfolgt, so dass einerseits die gewünschte optische Präzision sowie die Kosten des Spiegels nachteilig beeinflusst werden.

Aus der WO 01/90662 A2 ist ein zweiachsig nachführbarer Parabolspiegel bekannt, der aus mehreren Stücken zusammengesetzt ist: Dabei sind mehrere Großsegmente vorgesehen, die ihrerseits aus mehreren Einzelstücken bestehen können, welche wiederum jeweils aus mehreren einzelnen Segmenten zusammengesetzt sein können, um so Spiegelflächen mit Durchmessern von mehr als 8 m zu ermöglichen. Als Material für die Stücke des Parabolspiegels ist ein Polystyrolextruderschaum höherer Dichte vorgesehen. Am den Kanten der Stücke kann jeweils eine Nut mit etwa U-förmigem Querschnitt geschaffen werden, indem aus den Kanten des Stückes jeweils ein länglicher Stab mit etwa D-förmigem Querschnitt herausgetrennt wird. Zwei benachbarte derartige Stäbe können miteinander verklebt und mit einer Außenhaut aus faserverstärktem Kunststoff versehen werden, so dass sie eine Art loser Feder bilden. Die einzelnen Stücke des Parabolspiegels können dann unter Verwendung dieser "Federn" verbunden werden, ähnlich wie dies von Nut-und-Feder-Verbindungen mit losen Federn bei Bodenplatten bekannt ist. Zusätzliche Versteifungsrippen, die ebenfalls aus dem Schaumwerkstoff oder aus Holz bestehen können, dienen zur Aussteifung. Anschließend wird die Rückseite des Parabolspiegels mit einer Faserverstärkung versehen.

Nachteilig ist, dass die Vielzahl von einzelnen Stücken, aus denen der Spiegel zusammengesetzt ist, eine Vielzahl von Verbindungslinien ergibt, die das Einhalten einer Sollkontur naturgemäß erschweren. Die Verwendung eines Schaumwerkstoffs ist ebenfalls problematisch, wenn ein hohes Maß an optischer Präzision des fertiggestellten Spiegels gefordert ist. Schließlich ist nachteilig, dass für die Präzision bzw. Konturgenauigkeit des Spiegels die Außenhaut aus faserverstärktem Kunststoff maßgeblich ist. Angesichts der angestrebten Abmessungen des Spiegels und der Tatsache, dass die Aufteilung des Spiegels in die vielen einzelnen Stücke transportgerechte Abmessungen ermöglichen soll, ist vorgesehen, dass der Spiegel erst an Ort und Stelle seiner vorgesehenen Verwendung zusammengesetzt werden soll. An der Baustelle jedoch die einzelnen Stücke des Spiegels so präzise zusammenzufügen und mit der faserverstärkten Außenhaut zu versehen, dass die gewünschten optischen Eigenschaften des Spiegels im Sinne eines Präzisions-spiegel eingehalten bzw. erreicht werden, ist sehr schwierig. Zudem kann laut der WO 01/90662 A2 durchaus vorgesehen sein, die erwähnten Versteifungsrippen nicht nur auf der Rückseite, sondern auch oder sogar ausschließlich auf der Vorderseite vorzusehen, also auf der reflektierenden Spiegelfläche, so dass im Sinne dieser Druckschrift offensichtlich an die optischen Eigenschaften des Spiegel andere Anforderungen gestellt werden als an einen Präzisionsspiegel.

Aus der ES 2 157 179 A1 ist ein Spiegel bekannt, welcher Sonnenstrahlen auf einen Empfänger bündelt, der beispielsweise als Photovoltaikzelle oder als Thermomotor ausgestaltet sein kann. Vom Mittelpunkt der aus mehreren Segmenten bestehenden Spiegelfläche erstreckt sich eine mittlere Achse, die an ihrem von der Spiegelfläche entfernten Ende den Empfänger tragen kann. Der Empfänger kann jedoch auch durch mehrere Streben gehalten sein, die am äußeren Rand der Spiegelfläche verteilt angeordnet sind und sich zu dem Empfänger erstrecken, der im Abstand vor dem Zentrum der Spiegelfläche angeordnet ist. Auch in diesem Fall, wenn sie nicht den Empfänger trägt, ist eine mittlere Achse vorgesehen, weil sie zur Befestigung von mehreren Spanndrähten dient, die zur Spiegelfläche verlaufen und gemeinsam ein tragendes Element der Statik des Spiegels bilden.

Nachteilig ist, dass die Konstruktion des Spiegels nicht speziell auf die Verwendung von Kunststoff für die Spiegelsegmente ausgelegt ist, denn die Segmente der Spiegelfläche können aus verschiedenen Materialien wie z. B. aus faserverstärktem Kunststoff oder aus Stahl bestehen. Das Einstellen der vielen Spanndrähte zur Einrichtung der gewünschten Kontur der Spiegelfläche ist kompliziert und erfordert viel Zeit.

Während die drei vorgenannten Druckschriften Spiegel betreffen, bei denen die Spiegelfläche aus Kunststoff-Segmenten gebildet ist bzw. sein kann, schlägt die FR 2 853 732 A1 Siliziumkarbid und Silizium als Material für die Herstellung eines gattungsfremden Spiegels vor, der als Präzisionsspiegel für wissenschaftliche Zwecke dienen soll. Die Spiegelfläche ist einstückig, was ebenfalls gattungsfremd ist.

Der Erfindung liegt die Aufgabe zugrunde, einen gattungsgemäßen Präzisions-Spiegel dahingehend zu verbessern, dass dieser unter präziser Einhaltung gewünschter optischen Eigenschaften möglichst wirtschaftlich herstellbar ist.

Diese Aufgabe wird durch einen Präzisions-Spiegel mit den Merkmalen des Anspruchs 1 gelöst. Ein vorteilhaftes Herstellungsverfahren eines solchen Präzisions-Spiegels ist in Anspruch 10 beschrieben.

Die Erfindung schlägt mit anderen Worten vor, dass der Präzisions-Spiegel folgende Merkmale aufweist:
- Er besteht aus mehreren Spiegel-Segmenten, so dass die Spiegelfläche mit ihren ggf. mehrere Meter großen Abmessungen nicht einstückig ausgestaltet ist, sondern mehrteilig.
   Dies erleichtert einerseits den Transport hinsichtlich der oben genannten Aspekte. Zudem wird auch die Herstellung des Spiegels positiv beeinflusst: die Fehlerwahrscheinlichkeit nimmt mit der Größe der herzustellenden Spiegelfläche zu.
   Daher wird die Herstellung zunehmend größerer Spiegelflächen technisch zunehmend anspruchsvoller und auch wirtschaftlich, gemessen an der Vergrößerung der Spiegelfläche, überproportional teurer.

- Die Spiegel-Segmente bestehen aus Kunststoff. Dies ermöglicht eine preisgünstige Herstellung und eine einfache Handhabung, denn zusätzlich zur Vereinfachung aufgrund des verringerten Gewichts im Vergleich zu einer vollständigen, einteiligen Spiegelfläche ist das Kunststoffmaterial an sich auch robust und leicht.
- Der Spiegel weist Verstärkungsrippen an der Rückseite der Spiegelfläche auf, so dass auch bei der Kunststoffkonstruktion der Spiegelfläche ein hohes Maß an Formstabilität sichergestellt ist und unerwünschte Verformungen, die durch das Eigengewicht des Spiegels oder durch Windeinwirkung hervorgerufen werden könnten, minimiert oder ausgeschlossen sind.
- Die Verstärkungsrippen sind nicht jeweils einstückig als integraler Bestandteil eines Spiegel-Segments ausgestaltet, sondern als separate Bauteile hergestellt. Diese beiden verschiedenartigen Bauteile werden anschließend fest miteinander verbunden, beispielsweise verklebt. Dies widerspricht dem in der Kunststoffverarbeitung herrschenden Trend, möglichst hoch integrierte Bauteile zu schaffen.

Auf den ersten Blick lassen sich zwar Formkosten und Montagekosten einsparen, wenn in großer Integrationsdichte ein einziges Bauteil geschaffen wird, das ansonsten aus einzelnen Komponenten zusammengesetzt wäre.

Vorschlagsgemäß jedoch, entgegen diesem genannten, in der Fachwelt vorherrschenden Trend, ergibt sich der Vorteil, dass die einzelnen zu transportierenden Teile des Spiegels jeweils möglichst flach ausgestaltet werden können und beim Transport eine optimal dichte Anordnung und dementsprechend möglichst wirtschaftliche Nutzung des verfügbaren Transportraums ermöglichen. Da der Transportweg vom Hersteller zum Aufstellort des Präzisions-Spiegels mehrere hundert oder sogar einige tausend Kilometer lang sein kann, stellt dieser Aspekt einen erheblichen wirtschaftlichen Vorteil gegenüber einer höher integrierten Ausgestaltung des Präzisions-Spiegels dar.

Zudem ergibt sich als zweiter Vorteil die Möglichkeit einer grundsätzlichen Anpassung bzw. Nachbearbeitung: die separate Herstellung der Segmente einerseits und der Verstärkungsrippen andererseits ermöglicht eine schnelle Korrektur, wenn sich bei einer Serienfertigung herausstellen sollte, dass stets an denselben Stellen Abweichungen von der Sollkontur der Bauteile vorliegen: Gegebenenfalls ist dann eine Nachbearbeitung der hergestellten Bauteile in der Weise möglich, dass beim Zusammenfügen der Segmente mit den Verstärkungsrippen diese Abweichungen ausgeglichen werden. Oder es können die Herstellungsformen - z. B. Spritzguss- oder Pressformen - der beiden Kunststoffbauteile nachbearbeitet werden, so dass die anschließend hergestellten Bauteile später eine Spiegelfläche ohne die erwähnten Abweichungen ergeben. Derartige Nachbearbeitungen der Herstellungsformen sind einfacher und damit schneller und preisgünstiger durchzuführen als bei nur einer Form, die zur Herstellung eines einzigen, dementsprechend komplexeren Bauteils dient.

Schließlich ergibt sich als dritter Vorteil die Möglichkeit einer individuellen Anpassung bzw. Nachbearbeitung zur Erzielung einer maximalen Präzision, wie dies in den Verfahrensansprüchen 10 und 11 beschrieben ist: eine Herstellungsweise ist möglich, bei welcher die separat hergestellten Verstärkungsrippen individuell an das jeweilige Segment der Spiegelfläche angepasst werden können, mit dem sie verbunden werden sollen. Auf diese Weise können Ungleichmäßigkeiten jedes einzelnen Segments ausgeglichen werden: so kann z. B. zunächst das Segment vermessen werden, und bei Abweichungen von der Sollkontur kann die Rückseite des Segments nachgearbeitet werden, oder es kann die Kontaktfläche der Verstärkungsrippe nachgearbeitet werden, mit welcher die Verstärkungsrippe dem Segment anliegt, um jedenfalls beim Zusammenfügen der Segmente mit den Verstärkungsrippen die präzise Einhaltung der Sollkontur sicherzustellen.
- Die Wandstärke der Spiegelfläche nimmt zum Zentrum ab. Zum Zentrum hin verringert sich der Abstand der radial verlaufenden Verstärkungsrippen, so dass dementsprechend eine dort reduzierte Stabilität der Spiegelfläche kompensiert wird. Durch die verringerte Wandstärke kann zugunsten einer einfachen Montage Gewicht und zugunsten einer verbesserten Wirtschaftlichkeit Material eingespart werden.
- Vorschlagsgemäß ist weiterhin vorgesehen, dass jedes Segment jeweils eine innere Abkantung und eine äußere Abkantung aufweist. Wenn die Spiegelfläche dann aus den mehreren Segmenten zusammengesetzt wird, schließen die Abkantungen aneinander an und bilden einen radial inneren und einen radial äußeren Kragen. Dadurch wird erstens jeweils die Kontaktfläche zwischen zwei benachbarten Segmenten vergrößert, so dass die Stabilität ihrer Verbindung verbessert wird, und zusätzlich werden so zwei konzentrische Verstärkungsrippen geschaffen, die quer zu den radial verlaufenden, separat hergestellten Verstärkungsrippen verlaufen.
- Vorschlagsgemäß ist schließlich auch vorgesehen, dass die Verstärkungsrippen als Einbuchtungen ausgestaltete Absätze aufweisen, mit denen sie jeweils einer Abkantung des Segments anliegen. So wird ein regelrechter mechanischer Verbund geschaffen und zudem wird wiederum die Kontaktfläche vergrößert, so dass z. B. im Falle einer Verklebung die Stabilität der Verbindung zwischen den Segmenten und den Verstärkungsrippen verbessert wird.

Die Spiegelfläche muss hohen Windgeschwindigkeiten standhalten und darf sich dabei nicht verbiegen. Auch ist die notwendige Präzision bzw. das Einhalten vorgegebener Toleranzen für ein Bauteil mit den beschriebenen großen Abmessungen sehr anspruchsvoll. Das Einhalten der Toleranzen ist notwendig, um eine gute Fokussierung des Parabolspiegels sicherzustellen.

Es ist zwar grundsätzlich aus anderen Anwendungsgebieten bekannt, Kunststoffteile mit separaten, aufgeklebten Rippen zu verstärken. Diese Bauform hat aber angesichts der an die fertige Konstruktion eines Präzisions-Spiegels gestellten Anforderungen nicht nahegelegen für eine Kunststoffkonstruktion mit einem großen Durchmesser wie den vorgenannten Parabeln von mehreren Metern, beispielsweise mehr als 10 m Durchmesser, bei der die Spiegelfläche zudem präzise eine zuvor berechnete Form einnehmen soll.

Geringfügige Änderungen im Verhältnis von Wandstärke zur Rippenanzahl können bei einem Gesamtgewicht von etwa 2t schnell zu Gewichtsunterschieden von 500 kg führen. Aufgrund des Materialeinsatzes und der damit verbundenen Kosten und aufgrund der dementsprechend unterschiedlichen Anforderungen an die Haltekonstruktion des Spiegels können daher diese geringfügigen Änderungen darüber entscheiden, ob eine Spiegelkonstruktion wirtschaftlich wettbewerbsfähig ist oder nicht. Ein wesentlicher Aspekt des vorliegenden Vorschlags liegt in der getrennten Herstellung von den Segmenten der Parabelfläche einerseits und der Verstärkungsrippen andererseits. Zusätzlich zu den bereits beschriebenen Vorteilen ist dies insofern vorteilhaft, als es technisch sehr anspruchsvoll ist, etwa 5 m lange Kunststoffteile in großen Stückzahlen und mit dementsprechend kurzen Zykluszeiten herzustellen. Dies gilt insbesondere, je komplexer die Bauteilgeometrie solch großer Kunststoffteile ist. Durch die getrennte Fertigung der Spiegel-Segmente und der Verstärkungsrippen wird daher in sehr vorteilhafter Weise die Fehleranfälligkeit beim Herstellungsverfahren und damit der mögliche Anteil an Ausschuss reduziert.

Der vorschlagsgemäß gewölbt geformte, also schalenartige Spiegel kann insbesondere vorteilhaft als Parabolspiegel geformt sein, so dass parallel auftreffende Strahlen, wie z. B. das Sonnenlicht, möglichst hoch konzentriert gebündelt werden können.

Eine partielle Verstärkung kann vorteilhaft vorgesehen sein, um auftretende Kräfte sicher aufzunehmen und die bereits angesprochene Formstabilität der Spiegelfläche sicherzustellen. Die Verstärkung ist vorzugsweise im unteren Rippenbereich der Verstärkungsrippen vorgesehen uns in Form von so genannten Längs-Rovings ausgestaltet. Sie kann beispielsweise als eine in Längsrichtung der Verstärkungsrippe verlaufende Faserverstärkung aus Carbon- oder Glasfasern ausgestaltet sein.

Eine relativ hohe Rippenzahl ermöglicht ein hohes Maß an Formstabilität der Spiegelfläche mit jeweils vergleichsweise dünnwandigen und dementsprechend leichten sowie preisgünstigen Bauteilen. Die Handhabung der Bauteile am Aufstellungsort des Spiegels wird dadurch erheblich vereinfacht und eine schnelle und dementsprechend preisgünstige Montage des Spiegels begünstigt.

Die aus Kunststoff bestehenden Segmente ergeben die Spiegelfläche. Diese wird durch das Aufbringen einer Spiegelschicht fertig gestellt, wobei unterschiedliche Möglichkeiten genutzt werden können, die sich nach den wirtschaftlichen Rahmenbedingungen oder zum Beispiel auch nach den Einsatzbedingungen des Präzisions-Spiegels richten können. Beispielsweise kann durch das Aufkleben einer Spiegelfolie die Spiegelschicht geschaffen werden, oder durch das Aufkleben einer dünnen, biegsamen Spiegelglasschicht. Insbesondere, wenn dieses erst am Aufstellungsort des Spiegels erfolgt, können Beschädigungen der empfindlichen Spiegeloberfläche während des Transports vollständig ausgeschlossen werden, was den Transport weiter vereinfacht und wirtschaftlich positiv beeinflusst.

Durch die segmentierte Bauweise und die separate Ausgestaltung der Verstärkungsrippen lässt sich viel Platz beim Transport sparen. Die Verstärkungsrippen können dort verklebt werden, wo der Spiegel aufgestellt werden soll.

Besonders platzsparend und leicht zu handhaben sind entsprechend kleine Spiegel-Segmente. Um bei der Montage der Spiegel-Segmente zuverlässig die gewünschte Kontur der Spiegelfläche sicherzustellen, beispielsweise eine Parabel, kann vorgesehen sein, dass die Spiegel-Segmente sich jeweils vom Zentrum oder einem zentrumsnahen Bereich bis zum äußeren Rand der Spiegelfläche erstrecken, so dass sich der Durchmesser der Spiegelfläche aus den Abmessungen nur zweier, sich diametral gegenüberliegenden Spiegel-Segmente ergibt. Die erwünschten kleinen Abmessungen erhalten die Spiegel-Segmente durch eine entsprechend schmale Ausgestaltung, so dass beispielsweise wenigstens 20 Spiegel-Segmente nebeneinander angeordnet werden, um das Rund der Spiegelfläche zu ergeben. Insbesondere bei entsprechend großen Spiegeldurchmessern können 30 oder mehr Spiegel-Segmente vorgesehen sein.

Insbesondere je größer der Spiegeldurchmesser ist und je geringer dementsprechend die Eigensteifigkeit der Spiegelfläche ist, ist es statisch vorteilhaft, viele Rippen vorzusehen, um sicherzustellen, dass die berechnete Form des Spiegels zuverlässig beibehalten wird. Als technischer und wirtschaftlicher Ausgleich zu der hohen Rippenzahl kann die Wandstärke der Parabelfläche reduziert werden. Auf diese Weise können bei größeren Parabelkonstruktionen wie Parabeln von mehr als 10 m, beispielsweise 12,5 m Durchmesser, und mit einem Gewicht der Parabel von insgesamt ca. 2 t mehrere 100 kg Material eingespart werden. So kann beispielsweise vorgesehen sein, dass jedes Segment von zwei Rippen gestützt wird, wobei jedoch je nach Konstruktion des Spiegels im Einzelfall mehr oder auch weniger als zwei Rippen pro Segment vorgesehen sein können.

Statisch ist eine größere Wandstärke nahe dem Zentrum der Parabelfläche nicht notwendig und somit kann durch eine zum Zentrum abnehmende Materialstärke Material und Gewicht des Spiegels reduziert werden, was erstens Kosten spart und zweitens auch den wirtschaftlichen und technischen Aufwand für die Haltekonstruktion des Spiegels reduziert.

Die getrennte Fertigung der Parabelfläche und der Verstärkungsrippen ermöglicht es zudem auf besonders einfache und wirtschaftliche Weise die Anzahl der an einem Spiegel vorgesehenen Rippen zu verändern, ohne die verwendeten Kunststoffteile selbst zu ändern und dementsprechend in eine neue Form investieren zu müssen. Somit kann eine einfache, jeweils optimal wirtschaftliche Anpassung des Spiegels an unterschiedliche Aufstellungsbedingungen erfolgen, beispielsweise an Gebiete mit höherer oder niedrigerer Windbelastung.

Vorteilhaft kann vorgesehen sein, dass jeweils eine Verstärkungsrippe der die Spiegelfläche bildenden, gebogenen Fläche des Segments anliegt, und dass zusätzlich jeweils eine Verstärkungsrippe entlang der Trennlinie zwischen zwei Segmenten verläuft, derart, dass sie zwei benachbarten Segmenten gleichzeitig anliegt. Auf diese Weise können eine ganze und jeweils zwei halbe Verstärkungsrippen einem Segment zugerechnet werden, so dass das Segment rechnerisch von zwei Verstärkungsrippen unterstützt wird. Tatsächlich jedoch wird es entlang dreier Linien unterstützt, was seine Formstabilität verbessert. Zudem ist dadurch, dass zwei benachbarte Segmente auf einer gemeinsamen Verstärkungsrippe aufliegen, ein glatter bzw. bündiger Übergang zwischen den beiden Segmenten sichergestellt, so dass eine durchgehend glatte Spiegelfläche erzielt werden kann. Dabei kann z. B. vorgesehen sein, dass die Spiegelschicht erst dann auf die Segmente aufgebracht wird, wenn die Segmente bereits zu der gesamten Spiegelfläche zusammengefügt worden sind, so dass dann die Trennlinien zwischen zwei Segmenten durch die Spiegelschicht überdeckt werden können und somit selbst kleine Fugen, die sich ansonsten evtl. zwischen zwei benachbarten Segmenten in der Spiegelschicht ergeben könnten, vermieden werden.

Wie dies im Verfahrensanspruch 10 beschrieben ist, kann vorteilhaft vorgesehen sein, dass die Verstärkungsrippen jeweils eine gefräste Kontaktfläche aufweisen, mit welcher sie der die Spiegelfläche bildenden, gebogenen Fläche des Segments anliegen. Somit kann die optimale Anpassung der Verstärkungsrippe an das zugeordnete Segment sichergestellt werden. Beispielsweise können in Art einer Serienfertigung sämtliche Verstärkungsrippen gleichartig befräst werden, um beispielsweise Ungenauigkeiten auszugleichen, die sich bei der Herstellung der Segmente oder der Verstärkungsrippen nicht haben vermeiden lassen, und um eine Bauteiloberfläche zu schaffen, die optimal für eine Verklebung vorbereitet ist und z. B. die dafür optimale Oberflächenrauhigkeit aufweist. Oder es kann, wie bereits eingangs erwähnt, eine individuelle Befräsung jeder einzelnen Verstärkungsrippe vorgesehen sein, die nach einer messtechnischen Erfassung der Verstärkungsrippe selbst sowie des zugeordneten Segments eine optimale komplementäre Konturierung dieser beiden Bauteile ermöglicht und somit eine höchst präzise, der Sollkontur entsprechende Oberfläche der Spiegelfläche sicherstellen kann.

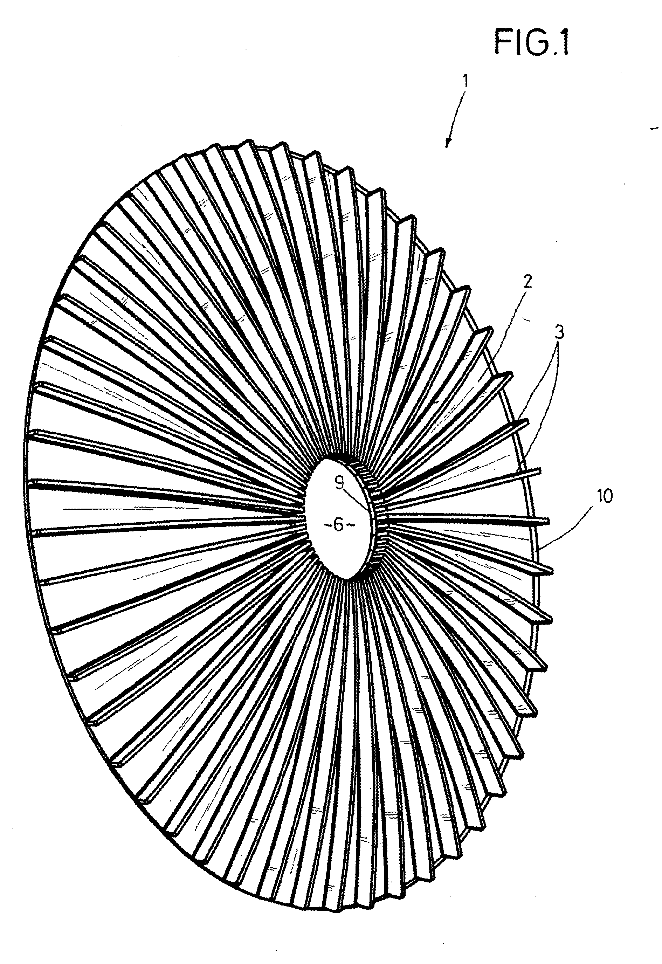

Ein Ausführungsbeispiel der Erfindung wird anhand der rein schematischen Darstellungen nachfolgend näher erläutert. Dabei zeigen die
- Fig. 1 bis 8: einen Präzisions-Spiegel sowie dessen als Segmente und Verstärkungsrippen ausgestalte- te Bauteile aus mehreren unterschiedlichen Blickrichtungen sowie als separate Bauteile.

Fig. 1 zeigt eine perspektivische Ansicht auf die Rückseite eines Spiegels 1, der aus der eigentlichen Spiegelfläche 2 sowie einer Vielzahl von Verstärkungsrippen 3 besteht.

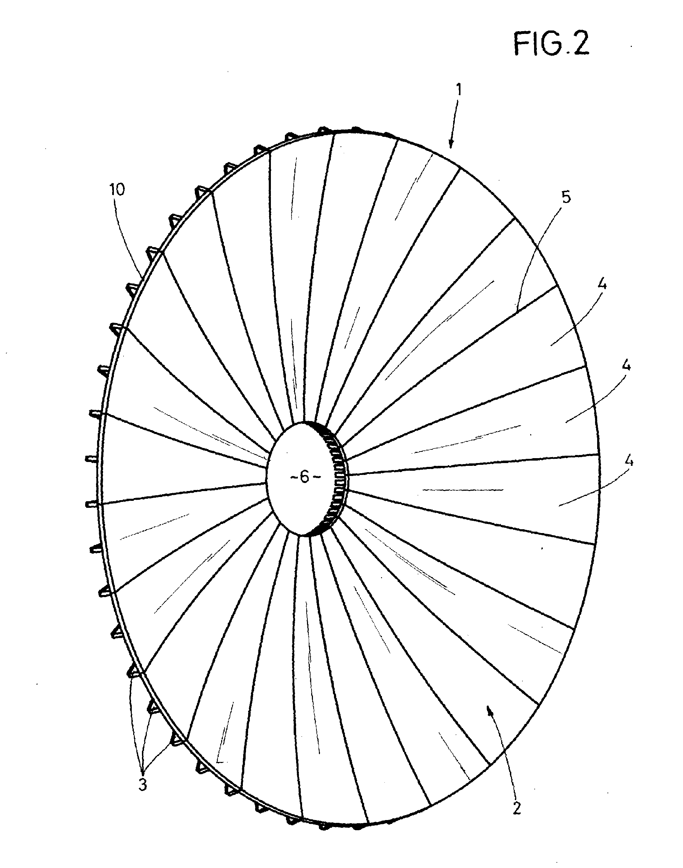

Fig. 2 zeigt eine perspektivische Ansicht auf die Vorderseite des Spiegels 1. Die Spiegelfläche 2 ist in eine Vielzahl von Segmenten 4 aufgeteilt, wobei die Segmente 4 seitlich aneinander anschließen und Trennlinien 5 zwischen den einzelnen Segmenten 4 ersichtlich sind. Auf diese Vorderseite trifft das vom Spiegel 1 zu reflektierende Licht auf, so dass auf die Vorderseite der Spiegelfläche 2 eine Licht reflektierende Beschichtung aufgetragen sein kann, beispielsweise in Form einer aufgeklebten Folie. Diese Beschichtung kann auf die einzelnen Segmente 4 aufgetragen sein, beispielsweise bereits vor deren Montage zu einer gemeinsamen Spiegelfläche 2, so dass die Trennlinien 5 zwischen den einzelnen Segmenten 4 auf dieser Vorderseite des Spiegels 1 wie in Fig. 2 sichtbar sind. Alternativ kann die Beschichtung kann auf die gesamte Spiegelfläche 2 aufgetragen sein, nachdem sie durch die Montage der einzelnen Segmente 4 geschaffen worden ist, so dass die Trennlinien 5 verdeckt sind.

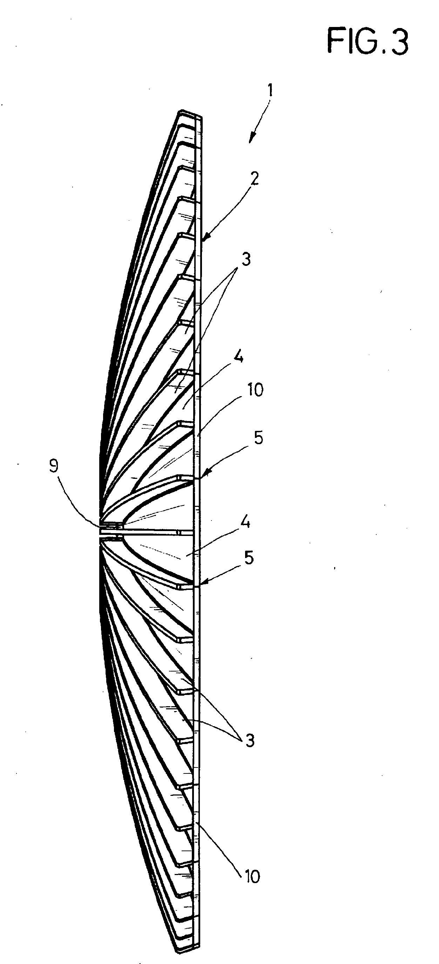

Fig. 3 zeigt eine Seitenansicht auf den Spiegel 1. Jedes der Segmente 4 ist mit jeweils drei Verstärkungsrippen 3 versehen, nämlich einer mittig verlaufenden Verstärkungsrippe 3 sowie zwei seitlichen Verstärkungsrippen 3, die jeweils entlang der beiden das Segment 4 begrenzenden Trennlinien 5 verlaufen. Mit den beiden seitlichen Verstärkungsrippen 3 sind, jeweils zur Hälfte, auch die beiden benachbarten Segmente 4 verbunden, so dass rechnerisch auf jedes Segment 4 zwei Verstärkungsrippen 3 entfallen. Dabei ist ersichtlich, dass die Verstärkungsrippen 3 in radialer Richtung mit ihren äußeren Ecken über den Äußeren Umfang der Spiegelfläche 2 bzw. der Segmente 4 hinausragen.

In der Mitte der Spiegelfläche 2 ist eine kreisrunde Ausnehmung 6 vorgesehen, so dass durch diese Ausnehmung 6 hindurch beispielsweise ein Empfänger in den Brennpunkt des Spiegels 1 ragen kann. Ein derartiger Empfänger dient zur Aufnahme der vom Spiegel 1 reflektierten Strahlung. Ein solcher Empfänger kann beispielsweise als Gefäß bzw. als ein Leitungsabschnitt ausgestaltet sein und ein Fluid enthalten, welches durch auf den Spiegel 1 aufreffende Sonnenstrahlung erhitzt wird und ggf. verdampft wird.

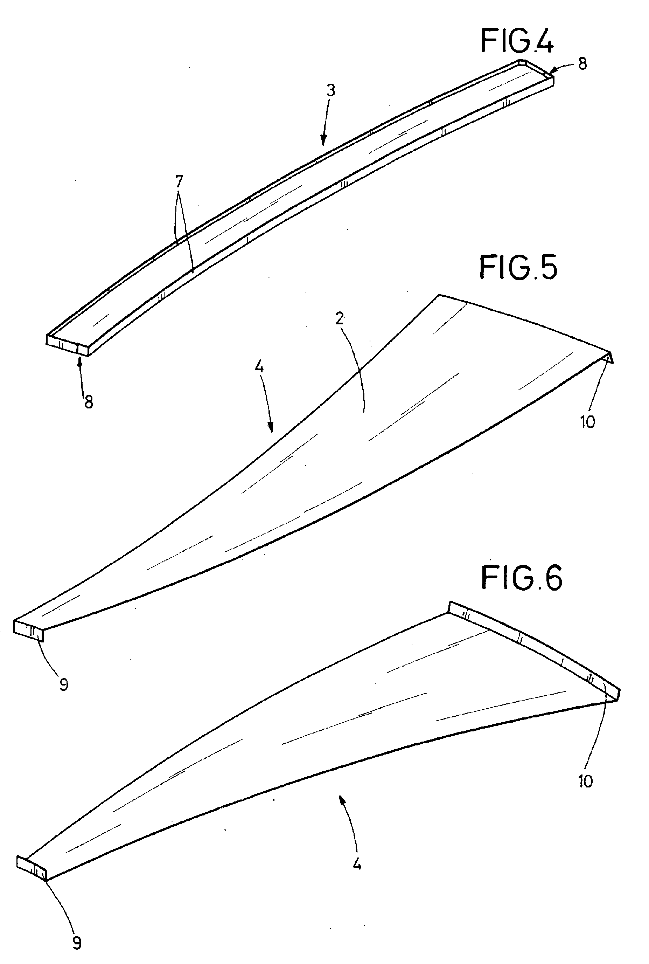

Fig. 4 zeigt eine perspektivische Ansicht auf eine Verstärkungsrippe 3. Die Verstärkungsrippe 3 ist Gewicht sparend ausgestaltet und weist eine vergleichsweise geringe Wandstärke auf, wobei ihre erforderliche Stabilität durch einen umlaufenden Rahmen 7 sichergestellt ist. Der Rahmen 7 weist an den beiden Stirnseiten der Verstärkungsrippe 3 jeweils einen Absatz 8 auf, der im Vergleich zu dem übrigen Rahmen 7 nach innen eingezogen ist und auf den später noch näher eingegangen wird.

Fig. 5 zeigt eine perspektivische Ansicht von vorn auf ein Segment 4, dessen Vorderseite einen Teil der Spiegelfläche 2 bildet, und Fig. 6 zeigt dasselbe Segment 4 von seiner Rückseite her. An seinem radial inneren Ende, also zur zentralen Ausnehmung 6 des Spiegels 1 hin, ist das Segment 4 mit einer inneren Abkantung 9 versehen, und in ähnlicher Weise ist an seinem radial äußeren Ende eine äußere Abkantung 10 vorgesehen. Beide Abkantungen 9 und 10 weisen nach hinten, zur Rückseite des Segments 4. Wie aus Fig. 1 bis 3 ersichtlich ist, bilden sämtliche Segmente 4 mit ihren Abkantungen 9 und 10 zwei geschlossene, ringförmige, innere und äußere Kragen der Spiegelfläche 2, durch welche die Formstabilität des Spiegels 1 verbessert wird.

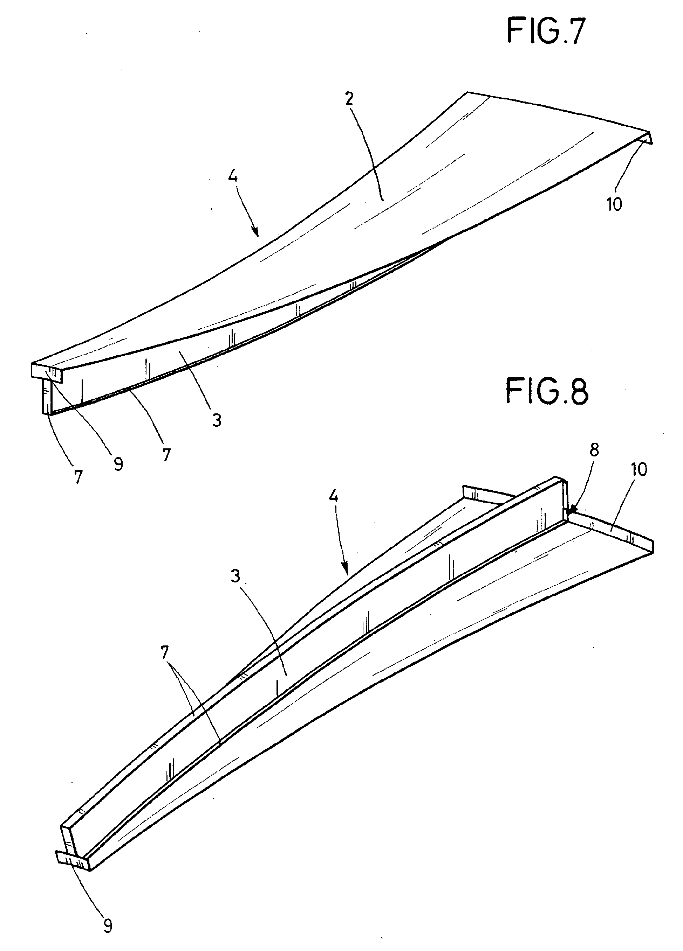

Fig. 7 zeigt ähnlich wie Fig. 5 eine perspektivische Ansicht von vorn auf ein Segment 4, welches jedoch auf seiner Rückseite mit einer Verstärkungsrippe 3 versehen ist. Der Absatz 8 an der radial inneren Stirnseite der Verstärkungsrippe 3 dient dazu, dass die Verstärkungsrippe 3 bündig an der inneren Abkantung 9 des Segments 4 anliegt. Ähnlich ermöglicht der Absatz 8 an der radial äußeren Stirnseite der Verstärkungsrippe 3, dass die Verstärkungsrippe 3 bündig an der äußeren Abkantung 10 des Segments 4 anliegt.

Fig. 8 zeigt ähnlich wie Fig. 6 eine perspektivische Ansicht auf die Rückseite eines Segments 4, welches wie in Fig. 7 auf der Rückseite mit einer Verstärkungsrippe 3 versehen ist.

## Patentansprüche

1. Präzisions-Spiegel,
mit einer schalenförmigen Spiegelfläche,
wobei die Spiegelfläche (2) aus mehreren Segmenten (4) besteht,
die Segmente (4) jeweils aus Kunststoff bestehen,
die Spiegelfläche (2) an ihrer Rückseite mit Verstärkungsrippen (3) versehen ist,
jedes Segment (4) jeweils eine Abkantung (9) am radial inneren Ende und eine Abkantung (10) am radical äusseren Ende aufweist,
wobei die Abkantungen (9, 10) bei der aus den Segmenten zusammengesetzten Spiegelfläche (2) einen inneren und einen äußeren Kragen bilden,
**dadurch gekennzeichnet,**
**dass** die Verstärkungsrippen (3) als separate, mit der Spiegelfläche (2) verbundene Bauteile ausgestaltet sind, die Wandstärke der Spiegelfläche (2) zu deren Zentrum hin abnimmt,
und **dass** die Verstärkungsrippen (3) als Einbuchtungen ausgestaltete Absätze (8) aufweisen, mit denen sie jeweils einer Abkantung (9, 10) des Segments (4) anliegen.

2. Präzisions-Spiegel nach Anspruch 1,
**dadurch gekennzeichnet,**
**dass** die Verstärkungsrippen (3) jeweils eine partielle Verstärkung in Form von Längs-Rovings aufweisen, welche in Längsrichtung der Verstärkungsrippe verlaufen.

3. Präzisions-Spiegel nach einem der vorhergehenden Ansprüche,
**dadurch gekennzeichnet,**
**dass** der Präzisions-Spiegel (1) als Parabolspiegel geformt ist.

4. Präzisions-Spiegel nach einem der vorhergehenden Ansprüche,
**dadurch gekennzeichnet,**
**dass** die Spiegelfläche (2) aus wenigstens 15 Segmenten (4) besteht.

5. Präzisions-Spiegel nach Anspruch 4,
**dadurch gekennzeichnet,**
**dass** die Spiegelfläche (2) aus wenigstens 30 Segmenten besteht.

6. Präzisions-Spiegel nach einem der vorhergehenden Ansprüche,
**dadurch gekennzeichnet,**
**dass** jedes Segment (4) durch wenigstens zwei Verstärkungsrippen (3) verstärkt ist.

7. Präzisions-Spiegel nach einem der vorhergehenden Ansprüche,
**dadurch gekennzeichnet,**
**dass** die Verstärkungsrippen (3) eine gefräste Kontaktfläche aufweisen, mit welcher sie der die Spiegelfläche (2) bildenden, gebogenen Fläche des Segments (4) anliegen.

8. Präzisions-Spiegel nach einem der vorhergehenden Ansprüche,
**dadurch gekennzeichnet,**
**dass** die Spiegelfläche (2) einen Durchmesser von mehr als 10 m aufweist.

9. Präzisions-Spiegel nach einem der vorhergehenden Ansprüche,
**dadurch gekennzeichnet,**
**dass** jeweils eine Verstärkungsrippe (3) der die Spiegelfläche (2) bildenden, gebogenen Fläche des Segments (4) anliegt,
und **dass** zusätzlich jeweils eine Verstärkungsrippe (3) entlang der Trennlinie (5) zwischen zwei Segmenten (4) verläuft, derart, dass sie zwei benachbarten Segmenten (4) gleichzeitig anliegt.

10. Verfahren zum Herstellen eines Präzisions-Spiegels nach einem der vorhergehenden Ansprüche,
**dadurch gekennzeichnet,**
**dass** jeweils die Kontaktfläche, mit welcher die Verstärkungsrippen (3) der die Spiegelfläche (2) bildenden, gebogenen Fläche des Segments (4) anliegen, befräst wird, bevor die jeweilige Verstärkungsrippe mit dem zugeordneten Segment verklebt wird.

11. Verfahren nach Anspruch 10,
**dadurch gekennzeichnet,**
**dass** jede einzelne Verstärkungsrippe individuell befräst wird,
wobei zunächst die Verstärkungsrippe selbst sowie das zugeordnete Segments messtechnisch erfasst wird,
und wobei die Befräsung derart erfolgt, dass eine optimale komplementäre Konturierung dieser beiden Bauteile zur Schaffung einer höchst präzisen, der Sollkontur entsprechende Oberfläche der Spiegelfläche erzielt wird.

## Claims

1. High-precision reflector with a saucer-shaped reflector surface where the reflector surface (2) consists of several reflector segments (4), each of the segments (4) is made of plastic, the rear of the reflector surface (2) is fitted with reinforcing ribs (3), each segment (4) has an angled edge (9) at its radial inner end and an angled edge at its radial outer end (10), and where the edges (9, 10) form an inner and an outer collar when the segments are assembled to form the reflector surface (2), **characterised in**
**that** the reinforcing ribs (3) are formed as separate components joined to the reflector surface (2), the wall-thickness of the reflector surface (2) decreases towards their centre, and that the reinforcing ribs (3) have recess-shaped shoulders (8), each of which lies against one angled edge (9, 10) of the segment (4).

2. High-precision reflector according to claim 1, **characterised in that** each of the reinforcing ribs (3) has a partial reinforcement in the form of a longitudinal roving which extends over the length of the reinforcing rib.

3. High-precision reflector according to either of the preceding claims, **characterised in that** the high-precision reflector (1) is formed as a paraboloid reflector.

4. High-precision reflector according to any of the preceding claims, **characterised in that** the reflector surface (2) consists of at least 15 segments (4).

5. High-precision reflector according to claim 4, **characterised in that** the reflector surface (2) consists of at least 30 segments (4).

6. High-precision reflector according to any of the preceding claims, **characterised in that** each segment (4) is reinforced by at least two reinforcing ribs (3).

7. High-precision reflector according to any of the preceding claims, **characterised in that** the reinforcing ribs (3) have a milled contact surface which lies against the curved surface of the segment (4) forming the surface (2) of the reflector.

8. High-precision reflector according to any of the preceding claims, **characterised in that** the reflector surface (2) has a diameter of more than 10 metres.

9. High-precision reflector according to any of the preceding claims, **characterised in that** one reinforcing rib (3) lies against each curved surface of the segment (4) forming the reflector surface (2) and that, in addition, one reinforcing rib (3) runs along the dividing line (5) between two segments (4) in such a way that it lies against two adjacent segments (4) at the same time.

10. Process for manufacturing a high-precision reflector according to any of the preceding claims, **characterised in that** each contact surface with which the reinforcing ribs (3) lie against the curved surface of the segment (4) forming the reflector surface (2) is milled before the reinforcing rib is bonded to the corresponding segment.

11. Process according to claim 10, **characterised in that** each reinforcing rib is individually milled, where the exact dimensions of the reinforcing rib itself and the corresponding segment are recorded beforehand and the milling operation is executed in such a way that the corresponding contours of the two components match one another perfectly, with the precision necessary to achieve the specified shape of the reflector surface.

## Revendications

1. Miroir de précision,
avec une surface spéculaire en forme de coupelle,
sachant que la surface spéculaire (2) se compose de plusieurs segments (4),
que les segments (4) se composent chacun de matière plastique,
que la surface spéculaire (2) est dotée sur son dos de nervures de renforcement (3),
que chaque segment (4) comporte un bord relevé (9) à l'extrémité radiale intérieure et un bord relevé (10) à l'extrémité radiale extérieure,
sachant que les bords relevés (9, 10) forment, sur la surface spéculaire (2) constituée des segments assemblés, un collet intérieur et un collet extérieur,
**caractérisé en ce que**
les nervures de renforcement (3) sont configurées sous forme de composants séparés reliés à la surface spéculaire (2),
**en ce que** l'épaisseur pariétale de la surface spéculaire (2) diminue en direction de son centre,
et **en ce que** les nervures de renforcement (3) présentent des épaulements (8) en forme de creux par lesquels elles s'appliquent contre un bord relevé (9, 10) du segment (4).

2. Miroir de précision selon la revendication 1,
**caractérisé en ce que**
les nervures de renforcement (3) présentent respectivement un renforcement partiel en forme de rovings longitudinaux présentant un tracé dans le sens longitudinal de la nervure de renforcement.

3. Miroir de précision selon l'une des revendications précédentes, **caractérisé en ce que**
le miroir de précision (1) a la forme d'un miroir parabolique.

4. Miroir de précision selon l'une des revendications précédentes, **caractérisé en ce que**
la surface spéculaire (2) se compose d'au moins 15 segments (4).

5. Miroir de précision selon la revendication 4,
**caractérisé en ce que**
la surface spéculaire (2) se compose d'au moins 30 segments.

6. Miroir de précision selon l'une des revendications précédentes, **caractérisé en ce que**
chaque segment (4) est renforcé par au moins deux nervures de renforcement (3).

7. Miroir de précision selon l'une des revendications précédentes, **caractérisé en ce que**
les nervures de renforcement (3) présentent une surface de contact fraisée, par laquelle ils appliquent contre la surface incurvée du segment (4) formant la surface spéculaire (2).

8. Miroir de précision selon l'une des revendications précédentes, **caractérisé en ce que**
la surface spéculaire (2) présente un diamètre de plus de 10 m.

9. Miroir de précision selon l'une des revendications précédentes, **caractérisé en ce que**
chaque fois une nervure de renforcement (3) applique contre la surface incurvée, formant la surface spéculaire (2), du segment (4),
et **en ce qu'**en plus chaque fois une nervure de renforcement (3) circule le long de la ligne de séparation (5) entre deux segments (4), de sorte qu'elle applique simultanément contre deux segments voisins (4).

10. Procédé pour fabriquer un miroir de précision selon l'une des revendications précédentes,
**caractérisé en ce que**
chaque fois la surface de contact, par laquelle les nervures de renforcement (3) appliquent contre la surface incurvée du segment (4) formant la surface spéculaire (2), est fraisée avant de coller la nervure de renforcement respective avec le segment correspondant.

11. Procédé selon la revendication 10,
**caractérisé en ce que**
chacune des nervures de renforcement est fraisée individuellement, sachant que d'abord la nervure de renforcement elle-même et le segment correspondant sont saisis par une technique métrologique, et sachant que le fraisage a lieu de sorte à obtenir des contours complémentaires optimaux sur ces deux composants pour conférer à la surface spéculaire une surface de très haute précision conforme au contour de consigne.
